# EUROPEAN PATENT APPLICATION

(11) **EP 3 940 907 A1**
(43) Date of publication of application: **19.01.2022**
(21) Application number: 20185669.7
(22) Date of filing: 14.07.2020
(51) Int. Cl.: H02G 15/06, H01R 11/12, H01R 13/52, H02G 3/08, H02K 11/30

(54) **TERMINAL HOUSING**

(71) Applicant: Mahle International GmbH, 70376 Stuttgart (DE)
(72) Inventor: AHEC, Ziga, 1290 Grosuplje (SI); BABIC, Gregor, 1312 Videm-Dobropolje (SI)
(74) Representative: BRP Renaud & Partner mbB Rechtsanwälte Patentanwälte Steuerberater

(57) **Abstract**

The present invention relates to a terminal housing (1) for housing a power terminal (2) and a cable shoe (3) connected to the power terminal (2). A simplified mounting and an enhanced variability of employment of the terminal housing (1) are achieved by providing a terminal housing (1), which, for the insertion of the power terminal (2), comprises a terminal opening (12), for the insertion of the cable shoe (3), comprises an outer opening (18) and, for the insertion of a screw (20), comprises a screw opening (19), wherein the terminal housing (12) further, for the outer opening (18) and the screw opening (19), comprises a corresponding receptacles (24, 25) for receiving a corresponding sealing element (26, 27).

The invention further relates to a motor controller system (0) with a motor controller (4) having a power terminal (2) and with such a terminal housing (1)

## Description

The present invention relates to a terminal housing for housing an electric power terminal and a cable shoe. The invention further relates to a motor controller system, which comprises a power terminal, a cable with a cable shoe and such a terminal housing.

The electric connection of electric power terminals to a power supply or a power consumer is crucial in many applications. An example for such an application is a motor controller of an electric machine in which power terminals of the motor control are connected to a power supply and/or to a power consumer. For the electric connection of a power terminal it is common to use a cable. At the intersection between the cable and the power terminal a mechanical and electric connection is thus required. A possible way to realise this connection is to use a cable shoe. A cable shoe is electrically and mechanically connected to an end of the cable and usually part of the cable. The cable shoe is further mechanically and electrically connected to the power terminal using a screw. In a number of applications it is required to fluidically and electrically seal the power terminal and/or the cable shoe. For this purpose, the terminal and the cable shoe are usually housed in a sealed housing.

EP 2 535 587 A1 shows an electric machine with a motor control. The motor control comprises power terminals. The power terminals are arranged within a control housing. A connector is arranged on a side of the control housing and sealably closes the housing. For each of the power terminals, a corresponding conductor protrudes on the side of the connector facing the inside of the control housing. Each of the conductors is connected to a cable shoe for the corresponding power terminal. On the side averted from the control housing, for each of the conductors the connector comprises a corresponding socket, into which a corresponding cable is plugged.

A disadvantage of solutions known in prior art is the complicated design for the connection of the power terminal to a cable. Moreover, for each motor controller design there is a corresponding customised design for the connection of the power terminal to a cable. There are in particular different designs for those connections, which need a fluidic sealing, and those which do not require such a sealing. These lead to a complicated mounting and increased manufacturing costs.

The problem addressed by the present invention is therefore the disclosure of improved, or at least other, form of embodiments of a housing for the electric connection of a power terminal to a cable shoe and an motor controller system with such a housing, which are in particular characterized by simplified and cost reduced mounting and/or an enhanced range of employment.

According to the invention, this problem is solved by the subjects of the independent claims. Advantageous forms of embodiment are subject matter of the dependent claims.

The present invention is based upon the general idea to use a housing for the connection of a cable shoe and a power terminal, wherein the power terminal and the cable shoe are inserted into a common volume of the housing, and wherein the housing comprises sealing receptacles for the selective reception of corresponding sealing elements in order to seal the common volume and thus the connection of the power terminal to the cable shoe to the outside, if needed. Thus, a complicated and customized design and manufacture of the corresponding application, in particular of a motor controller, is prevented or at least reduced. This results in a reduced cost of manufacture as well as in a simplified mounting. Moreover, the housing, also referred to as terminal housing in the following, by allowing the insertion of both the power terminal and the cable shoe, can have the same construction and be used for different constructions of the corresponding application, in particular for different constructions of the motor controller. This leads to an enhanced variability of employments of the housing and recued all over cost. In addition, the possibility of selectively arranging sealing elements in the sealing receptacles allows using the terminal housing for applications where a sealing of the power terminal and the cable shoe is needed as well as for applications where such a sealing is not required. This leads to a further enhancement of the variability of employments and a further reduction of all over cost.

In accordance with the idea of the invention, the terminal housing comprises a section, which delimits the common volume for the power terminal and the cable shoe. This section, also called clamp section in the following, runs in an axial direction and a circumferential direction and delimits the common volume, also referred to as clamp volume in the following. The terminal housing further comprises a section for the insertion of a cable, to which the cable shoe corresponds and is connected, in to the terminal housing. This section, also called cable section in the following, projects from the clamp section in a direction transverse or inclined to the axial direction and delimits a cable volume. The cable section, for the insertion of the cable shoe into the clamp volume, comprises an inner opening and, for the insertion of the cable and the cable shoe into the cable section, an outer opening opposing the inner opening. The inner opening conveniently connects the clamp volume and the cable volume. The clamp section, for the insertion of a screw into the clamp volume for fixing the cable shoe to the power terminal, comprises an opening also called screw opening in the following. The screw opening is distanced to the cable section and open transverse or inclined with respect to the cable section. The clamp section further comprises an opening for the insertion of the power terminal into the clamp volume also called terminal opening in the following. The terminal opening and the screw opening are arranged on opposite sides of the clamp section. The terminal housing further comprises a cover, which removably covers the screw opening.

The terminal housing further comprises, for receiving a cover sealing element for sealing the clamp volume to the outside, a cover sealing receptacle, which is delimited by the clamp section and the cover. The terminal housing, for receiving a cable sealing element for sealing the cable volume to the outside, comprises a cable sealing receptacle within the cable volume. The cable sealing receptacle is delimited by the cable section and arranged in the region of the outer opening.

In the corresponding application, if a cover sealing element is received in the cover sealing receptacle, a fluidic connection of the clamp volume to the outside via the screw opening is sealed. In addition, if a cable sealing is received in the cable sealing receptacle, a fluidic connection of the cable volume and thus of the clamp volume to the outside via the outer opening is sealed.

The cover can be removably attached to the clamp section in any way.

It is preferred if the cover is attached to the clamp section by a form fit connection. This allows a simplified mounting of the terminal housing and a reliable sealing, in case a cover sealing element is received in the cover sealing receptacle.

In principle, the cover sealing receptacle can be arranged outside the clamp volume.

It is preferred if the cover sealing receptacle is arranged in the clamp volume. In this case, the cover is at least partially inserted into the screw opening. This allows a simplified mounting of the terminal housing and an improved sealing, in case a cover sealing element is received in the cover sealing receptacle.

The terminal housing is preferably electrically insulating. This prevents undesired electrical currents and short circuits.

The terminal housing is advantageously a plastic housing.

In preferred forms of embodiment, the terminal housing, for receiving a terminal sealing element for sealing the clamp volume to the outside, comprises a terminal sealing receptacle, which is delimited by the clamp section. Thus, if a terminal sealing element is received in the terminal sealing receptacle in the corresponding application, a fluidic connection of the clamp volume to the outside via the terminal opening is sealed. Hence, sealing in the intersection between the terminal housing and the corresponding application is also realised using the terminal housing. This leads to a further simplification of the mounting and a further increase of the variability of employments of the terminal housing.

The terminal sealing receptacle can, in principle, be arranged within the clamp volume.

It is preferred if the terminal sealing receptacle is arranged on the side of the clamp section averted form the clamp volume. This allows inserting power terminals with different sizes and shapes through the terminal opening and thus to an increased variability of the employments of the terminal housing.

The terminal sealing receptacle can have any shape and construction.

In preferred forms of embodiment the terminal sealing receptacle comprises a groove in the terminal housing, in particular in the clamp section. The groove is preferably open on the side averted from the clamp volume.

According to advantageous forms of embodiment, the cable section radially projects from the clamp section and the screw opening and the terminal opening are open in axial direction. This leads to a simplified design of the terminal housing and a simplified mounting.

In each case, the directions indicated herein refer in particular to the axial direction, which can correspond to the projection direction of the power terminal. The radial direction, or the term "radial", thus means transverse to the axial direction. The circumferential direction runs about the axial direction.

The cover sealing receptacle can comprise any shape and construction.

In preferred forms of embodiment, the cover sealing receptacle comprises a groove that is radially open. Advantageously, the groove of the cover sealing receptacle is constructed in the cover. It is further preferred if the cover sealing receptacle is radially open to the inside.

According to favourable forms of embodiment, the cable volume decreases towards the inner opening, such that a sleeve of the cable shoe abuts the cable section and a base of the cable shoe is guided into the clamp volume through the inner opening. This leads to a defined position of the cable shoe within the clamp section and thus leads to a simplified mounting.

The cable section preferably comprises an enlargement in the region of the outer opening for delimiting the cable sealing receptacle. More preferably, the cable volume comprises a radially outer enlargement in the region of the outer opening, which delimits the cable sealing receptacle. In this way, the position of the cable sealing receptacle is clearly defined, leading to simplified mounting and improved sealing.

The terminal housing advantageously comprises a clamp for fixing the cable to the terminal housing, wherein the clamp is removably attached to the cable section in the region of the outer opening. This further simplifies the mounting.

The clamp may be of the marman or hinge type, that is constructed in the manner of a marman clamp or hinge clamp. The clamp can be removably attached to the cable section in any way.

Preferably the clamp is attached to the cable section using a form fit connection. Thus, the mounting is simplified.

It is further preferred if the cable sealing receptacle is delimited by the clamp when the clamp is attached to the cable section. In particular, forms of embodiment are preferred, in which the cable sealing receptacle is delimited by the radial enlargement of the cable volume and the clamp. This leads to a simplified mounting and an improved sealing with the cable sealing element, in case a cable sealing element is received in the cover sealing receptacle.

The clamp section advantageously comprises a nozzle projecting averted from the screw opening, wherein the nozzle comprises the terminal opening. This allows plugging the nozzle into a receptacle of the corresponding application, which surrounds the power terminal. Hence the mounting is simplified.

The terminal housing can be used for any application having a power terminal.

The terminal housing is preferably used for a motor controller. A corresponding system, thus, comprises the motor controller and the terminal housing. In the system, also referred to as motor controller system in the following, the terminal housing houses a power terminal of the motor controller, a cable shoe connected to the power terminal and a screw for fixing the cable shoe to the power terminal.

In the motor controller system the power terminal projects and is inserted into the clamp section of the terminal housing through the terminal opening. The cable is inserted into the terminal housing through the outer opening, such that the cable shoe is arranged in the clamp volume through the inner opening. The cable shoe is further arranged on the side of the power terminal facing the screw opening. The screw is inserted into the clamp volume through the screw opening and is screwed through the cable shoe into the power terminal, such that the cable shoe is clamped between the screw and the terminal.

The power terminal and/or the motor controller are in particular components of an electric machine, in particular of an electric motor.

In preferred forms of embodiment, the motor controller comprises a collar-like terminal receptacle, in which the power terminal is arranged and which surrounds the power terminal. The clamp section, preferably the nozzle of the clamp section, is plugged into the terminal receptacle. This leads to a simplified mounting.

It is preferred if the terminal sealing receptacle is delimited by the clamp section and the terminal receptacle.

In the corresponding application, in particular in the motor controller system and/or in the electric machine, in each of the sealing receptacles, a corresponding sealing element can be arranged. That is, a cover sealing element can be arranged within the cover sealing receptacle. In addition or as an alternative, a terminal sealing element can be arranged within the terminal sealing receptacle. In addition or as an alternative, a cable sealing element can be arranged in the cable sealing receptacle.

Each of the sealing elements can be of any kind.

The cover sealing element and/or the terminal sealing element can be a sealing ring, respectively.

The cable sealing can be a cable grommet.

Further important characteristics and advantages of the invention proceed from the sub-claims, the drawings and the associated description of the figures, with reference to the drawings.

It is understood that the above-mentioned characteristics, and those to be described hereinafter, are not only applicable in the respective combination indicated, but also in other combinations, or in isolation, without departing from the scope of the present invention.

Preferred exemplary embodiments of the invention are represented in the drawings and described in greater detail in the following description, wherein identical reference numbers identify identical, similar or functionally equivalent components.

In the figures, schematically in each case:
- Figure 1: shows a cut through a motor controller system with a terminal housing,
- Figure 2: shows an isometric, exploded view of the terminal housing.

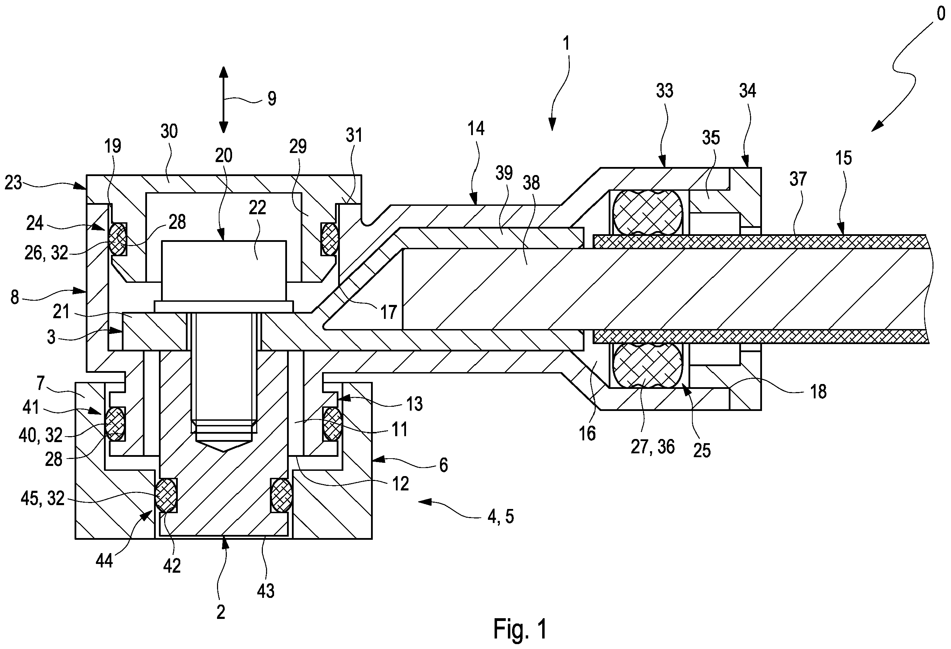

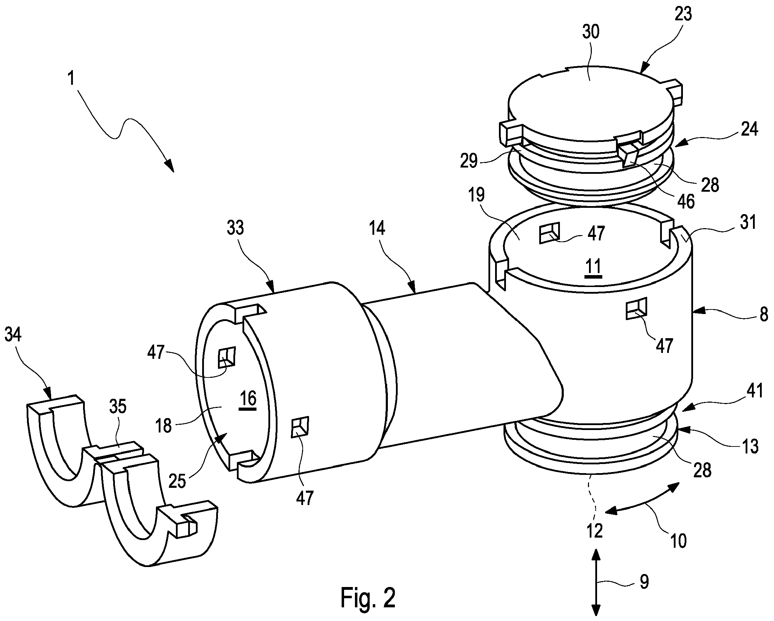

A terminal housing 1, as exemplary shown in figures 1 and 2, in a corresponding system 0, serves to accommodate and house a power terminal 2 and a cable shoe 3, which are connected to each other in the terminal housing 1. The terminal housing 1 is preferably made of an insulating plastic. The power terminal 2 is a component of a motor controller 4 as shown in figure 1. The motor controller 4 is in particular a component of an electric machine 5. The power terminal 2 projects from a housing 6 of the motor controller 4, which housing 6 is also called controller housing 6 in the following. In the exemplary embodiment shown, the power terminal 2 is surrounded by a collar-like receptacle 7 of the controller housing 6 projecting from the side of the controller housing 6 facing the terminal housing 1. The receptacle 7, also called terminal receptacle 7 in the following, is open on the side facing the terminal housing 1. In the shown exemplary embodiment, the power terminal 2 has a cylinder shape.

The terminal housing 1 is separate from the controller housing 6. The terminal housing 1 comprises a section 8, which houses the power terminal 2 and the cable shoe 3. This section 8, also called clamp section 8 in the following, runs in an axial direction 9 and a circumferential direction 10 in a cylindrical manner. In the shown exemplary embodiment and preferably, the axial direction 9 is the projection direction of the power terminal 2 if the terminal housing 1 houses the power terminal 2. The clamp section 8 delimits a volume 11, also called clamp volume 11 in the following, in which the power terminal 2 and the cable shoe 3 are housed.

Both, the power terminal 2 and the cable shoe 3 are inserted into the terminal housing 1 and the clamp section 8. For the insertion of the power terminal 2, the clamp section 8 comprises an opening 12 also called terminal opening 12 in the following. The terminal opening 12 is axially open. The terminal opening 12 is arranged in an axially projecting nozzle 13 of the clamp section 8, in the shown exemplary embodiment. The nozzle 13 is plugged into the terminal receptacle 7.

The terminal housing 1 further comprises a section 14, through which a cable 15 is inserted. The cable shoe 3 is arranged at an end of the cable 15 and mechanically as well as electrically connected to the cable 15. The section 14, also called cable section 14 in the following, projects from the clamp section 8 and is distanced to the terminal opening 12, in particular to the nozzle 13. In the exemplary embodiment shown and preferably, the cable section 14 radially projects from the clamp section 8. The cable section 14 delimits a volume 16 also called cable volume 16 in the following. The cable section 14 comprises a radially inner opening 17, which connects the cable volume 16 to the clamp volume 11. The cable section 14 further comprises a radially outer opening 18, which serves to insert the cable shoe 3 and the cable 15 into the terminal housing 1. The cable shoe 3 is passed and guided through the inner opening 17 into the clamp volume 11 and arranged on the side of the power terminal 2 averted from the terminal opening 12.

The clamp section 8 further comprises a screw opening 19 for the insertion of a screw 20 into the clamp volume 11. The screw opening 19 is arranged opposing the terminal opening 12 and is axially open. The screw 20 is thus inserted in to the clamp volume 11 from the side opposing the terminal opening 12 and the power terminal 2. The cable shoe 3 comprises a base 21, which is arranged axially between the power terminal 2 and a screw head 22 of the screw 20. The base 21 preferably has a ring-shape or a U-shape. The screw 20 is screwed into the power terminal 2, such that the base 21 is clamped between the screw head 22 and the power terminal 2, thereby electrically and mechanically connecting the cable shoe 3 to the power terminal 2. The screw opening 19 is covered by a cover 23 removably attached to the clamp section 8.

The terminal housing 1, for each of the outer opening 18 and the screw opening 19, comprises a corresponding receptacle 24, 25 for receiving a corresponding sealing element 26, 27, which seals a fluidic connection of the clamp volume 11 to the outside of the terminal housing 1 through the corresponding opening 18, 19.

That means that the terminal housing 1, for receiving a cover sealing element 26 for sealing the clamp volume 11 to the outside through the screw opening 19, comprises a cover sealing receptacle 24. The cover sealing receptacle 24 is delimited by the clamp section 8 and the cover 23. The cover sealing receptacle 24 of the shown exemplary embodiment comprises a radially open groove 28. The groove 28 is shaped in a collar 29 of the cover 23, which axially projects from a ground 30 of the cover 23, such that the collar 29 is arranged within the clamp volume 11 if the cover 23 is attached to the clamp section 8. The groove 28 is radially open to the outside, such that the cover sealing element 26 is radially arranged between the groove 28 and the clamp section 8 and axially received in the groove 28. The ground 30 lays on a front face 31 of the clamp section 8, which delimits the screw opening 19. Thus, the cover sealing element 26 can be arranged in the groove 28 prior to insertion of the collar 29 into the clamp section 8 through the screw opening 19. The cover sealing element 26 is a sealing ring 32 in the shown exemplary embodiment.

That further means that the terminal housing 1, for receiving a cable sealing element 27 for sealing the cable volume 16 and thus the clamp volume 11 to the outside through the outer opening 18, comprises a cable sealing receptacle 25. The cable sealing receptacle 25 is arranged in the region of the outer opening 18 and within the cable volume 16. The cable sealing receptacle 25 is delimited by the cable section 14. For this purpose, the cable volume 16 and the cable section 14 comprise a radially outer enlargement 33. In the exemplary embodiment shown, the terminal housing 1 comprises a clamp 34 for removably fixing the cable 15 to the cable section 14. The clamp 34 is removably attached to the cable section 14 in the region of the outer opening 18. The clamp 34 comprises a projecting shoulder 35, which, if the clamp 34 is attached to the cable section 14, is inserted in the cable volume 16 through the other opening 18 and arranged in the enlargement 33. The cable sealing receptacle 25 is thus delimited by the enlargement 33 and the shoulder 35. The cable sealing element 27, in the exemplary embodiment, is a cable grommet 36 arranged between an outer jacket 37 of the cable 15, in which a wire 38 of the cable 15 is arranged, and the cable section 14 in the enlargement 33.

The cable shoe 3 comprises a sleeve 39, in which the wire 38 is inserted and clamped. The base 21 projects from the sleeve 39. In the exemplary embodiment, the cable volume 16 decreases towards the inner opening 17, such that the sleeve 39 abuts the cable section 14 within the cable volume 16 and the base 21 is guided through the inner opening 17 into the clamp volume 11.

In the exemplary embodiment and preferably, the terminal housing 1, for receiving a terminal sealing element 40 for sealing the clamp volume 11 to the outside via the terminal opening 12, comprises a terminal sealing receptacle 41, which is delimited by the clamp section 8 in the region of the terminal opening 12. The terminal sealing receptacle 41 is thus arranged in the nozzle 13, in the shown exemplary embodiment. In the shown exemplary embodiment, the nozzle 13 comprises a radially open groove 28, which delimits the terminal sealing receptacle 41. The groove 28 of the terminal sealing receptacle 41 is arranged on the side of the nozzle 13 averted from the clamp volume 11 and thus radially open to the outside. If the nozzle 13 is inserted into the terminal receptacle 7 of the controller housing 6 the terminal receptacle 7 surrounds the groove 28. The terminal sealing element 40 in therefore arranged between the groove 28 and the terminal receptacle 7. Thus, the terminal sealing element 40 can be inserted into the groove 28 prior to plugging the nozzle 13 into the terminal receptacle 7. The terminal sealing element 40 can be a sealing ring 32, as shown in figure 1.

As it is clear by the figures, any of the cover sealing element 26, the cable sealing element 27 and the terminal sealing element 40 might not be used, if an according sealing is not required. This allows using the terminal housing 1 for employments, in which a sealing is required as well as for employments, in which a sealing is not necessary.

In the exemplary embodiment shown in figure 1, the power terminal 2 comprises a recess 42, which is open to the outside and arranged in a passage 43 of the controller housing 6. The recess 42 delimits a housing sealing receptacle 44, in which a housing sealing element 45 is arranged. The housing sealing element 45 seals the inside of the controller housing 6 to the outside. As shown in the exemplary embodiment, the housing sealing element 45 can be a sealing ring 32.

In the exemplary embodiment, the cover 23 and the clamp 34 are each removably attached to the clamp section 8 and the cable section 14 respectively by using a form fit connection. For this purpose, the cover 23 comprises radially projecting latches 46, which are clinched into corresponding cavities 47 of the clamp section 8. Similarly, the marmon clamp 34 comprises projecting latches 46, which are not visible in the figures. The latches 46 of the marmon clamp 34 are clinched into corresponding cavities 47 in the cable section 14.

## Claims

1. Terminal housing (1) for housing a power terminal (2) and a cable shoe (3) connected to the power terminal (2),
- with a clamp section (8), which runs in an axial direction (9) and a circumferential direction (10) and delimits a clamp volume (11) for housing the power terminal (2) and the cable shoe (3),
- with a cable section (14) for the insertion of a cable (15) connected to the cable shoe (3),
- wherein the cable section (14) projects from the clamp section (8) in a direction transverse or inclined to the axial direction (9) and delimits a cable volume (16),
- wherein the cable section (14), for the insertion of the cable shoe (3) into the clamp volume (11) , comprises an inner opening (17) and, for the insertion of the cable (15) into the cable section (14), an outer opening (18) opposing the inner opening (17),
- wherein the clamp section (8), for the insertion of a screw (20) into the clamp volume (11), comprises an screw opening (19) distanced to the cable section (14) and open transverse or inclined with respect to the cable section (14),
- with a cover (23), which removably covers the screw opening (19),
- wherein the clamp section (8), for the insertion of the power terminal (2) into the clamp volume (11), comprises a terminal opening (12) opposing the screw opening (19),
- wherein the terminal housing (1), for receiving a cover sealing element (26) for sealing the clamp volume (11) to the outside, comprises a cover sealing receptacle (24), which is delimited by the clamp section (8) and the cover (23),
- wherein the terminal housing (1), for receiving a cable sealing element (27) for sealing the cable volume (16) to the outside, comprises a cable sealing receptacle (25) within the cable volume (16), which is delimited by the cable section (14) and arranged in the region of the outer opening (18).

2. Terminal housing according to claim 1,
**characterized in that**
the terminal housing (1), for receiving a terminal sealing element (40) for sealing the clamp volume (11) to the outside, comprises a terminal sealing receptacle (41) arranged in the region of the terminal opening (12).

3. Terminal housing according to claim 2,
**characterized in that**
the terminal housing (1) comprises a groove (28) that is open on the side averted from the clamp volume (11) and delimits the terminal sealing receptacle (41).

4. Terminal housing according to one of claims 1 to 3,
**characterized in that**
- the cable section (14) radially projects from the clamp section (8),
- the screw opening (19) and the terminal opening (112) are open in axial direction.

5. Terminal housing according to one of claims 1 to 4,
**characterized in that**
the terminal housing (1) comprises a groove (28), which is radially open and delimits the cover sealing receptacle (25).

6. Terminal housing according to one of claims 1 to 5,
**characterized in that**
the cable volume (16) decreases towards the inner opening (17), such that a sleeve (39) of the cable shoe (3) abuts the cable section (14) and a base (21) of the cable shoe (3) is guided into the clamp volume (11).

7. Terminal housing according to one of claims 1 to 6,
**characterized in that**
the cable section (14) comprises a radial enlargement (33) in the region of the outer opening (18), which delimits the cable sealing receptacle (25).

8. Terminal housing according to one of claims 1 to 7,
**characterized in that**
the clamp section (8) comprises a nozzle (13) projecting averted from the screw opening (19), wherein the nozzle (13) comprises the terminal opening (12).

9. Terminal housing according to one of claims 1 to 8,
**characterized in that**
- the terminal housing (1) comprises a clamp (34) for fixing the cable (15) to the terminal housing (8),
- the clamp (34) is removably attached to the cable section (14) in the region of the outer opening (18).

10. Motor controller system (0) with a motor controller (4) and with a terminal housing (1) according to one of claims 1 to 9,
- wherein the motor controller (4) comprises a projecting power terminal (2),
- wherein the power terminal (2) is inserted into the clamp section (8) of the terminal housing (1) through the terminal opening (12),
- wherein a cable (15) with a cable shoe (3) is inserted into the terminal housing (1) through the outer opening (18), such that the cable shoe (3) is arranged in the clamp volume (11) on the side of the power terminal (2) facing the screw opening (19),
- wherein a screw (20) is screwed through the cable shoe (3) into the power terminal (2), such that the cable shoe (3) is clamped between the screw (20) and the power terminal (2).

11. Motor controller system according to claim 10,
**characterized in that**
the power terminal (2) is a component of a motor control (5) of the motor controller (4).

12. Motor controller system according to claim 10 or 11,
**characterized in that**
- the motor controller (4) comprises a terminal receptacle (7), in which the power terminal (2) is arranged,
- the terminal housing (1) is designed according to one of claims 2 to 8,
- the clamp section (8) is plugged into the terminal receptacle (7),
- the terminal sealing receptacle (41) is delimited by the clamp section (8) and the terminal receptacle (7).

13. Motor controller system according to one of claims 10 to 12,
**characterized in that**
a cover sealing element (26) is arranged within the cover sealing receptacle (24), wherein the cover sealing element (26) is in particular a sealing ring (32).

14. Motor controller system according to one of claims 10 to 13,
**characterized in that**
a terminal sealing element (40) is arranged within the terminal sealing receptacle (41), wherein the terminal sealing element (40) is in particular a sealing ring (32).

15. Motor controller system according to one of claims 10 to 14,
**characterized in that**
a cable sealing element (27) is arranged in the cable sealing receptacle (25), wherein the cable sealing element (27) is in particular a cable grommet (36).
